# EUROPEAN PATENT SPECIFICATION

(11) **EP 3 395 661 B1**
(45) Date of publication and mention of the grant of the patent: **16.06.2021**
(21) Application number: 18166966.4
(22) Date of filing: 12.04.2018
(51) Int. Cl.: B62K 25/28, B60G 13/00, F16F 9/54, B62K 25/04

(54) **REAR CUSHION DEVICE**
HINTERE FEDERUNGSEINRICHTUNG
DISPOSITIF DE RESSORT A AIR ARRIÈRE

(30) Priority: 24.04.2017 JP 2017085105
(43) Date of publication of application: 31.10.2018
(73) Proprietor: Suzuki Motor Corporation, Shizuoka 432-8611 (JP)
(72) Inventor: Kobayashi, Koji, Shizuoka, 432-8611 (JP); Miyagawa, Keitaro, Shizuoka, 432-8611 (JP)
(74) Representative: Henkel & Partner mbB

(56) References cited:
- EP-A1- 2 740 965
- JP-A- H0 648 358
- JP-A- S63 125 416
- US-A1- 2002 136 596

## Description

### TECHNICAL FIELD

The present disclosure relates to a rear cushion device having an entire length adjusting function.

### BACKGROUND

A rear cushion device configured to absorb shock caused due to irregularity of a road surface and the like is arranged between a vehicle main body and a rear suspension arm of a straddle-type vehicle such as a motorcycle. The rear cushion device includes a spring for absorbing the shock and a damper configured to attenuate vibrations of the spring. The damper includes a cylinder, a piston and a rod.

A direction in which the rear cushion device is mounted between the vehicle main body and the rear suspension arm is different depending on a structure and the like of the straddle-type vehicle. However, herein, for convenience of descriptions, it is assumed that the rear cushion device is mounted between the vehicle main body and the rear suspension arm so that the cylinder of the damper is arranged at an upper side and a part, which protrudes from the cylinder, of the rod of the damper is arranged at a lower side.

In the damper of the rear cushion device of the related art, an upper end portion of the cylinder and a lower end portion of the rod are respectively provided with mounting parts for mounting the rear cushion device between the vehicle main body and the rear suspension. A mounting part of the mounting parts, which is provided at the lower end portion of the rod, is referred to as 'end eye'.

The end eye is joined to the lower end portion of the rod, which protrudes outward from the cylinder, via a joining member. Specifically, the joining member is a member of which an outer shape is a cylindrical shape and an outer diameter is larger than the rod. The joining member is arranged coaxially with the rod, and an upper part of the joining member is fixed to the lower end portion of the rod. Also, a lower part of the joining member is formed with a mounting screw hole for mounting thereto the end eye. The mounting screw hole is coaxial with the rod, and opens to a center of a lower end face of the joining member. Also, the end eye has a ring-shaped part having a bolt insertion hole for mounting the end eye to a bracket provided to the rear suspension arm by using a coupling bolt and a rod-shaped part protruding upward from an outer periphery part of the ring-shaped part and having substantially the same diameter as the rod, and an outer peripheral surface of the rod-shaped part is formed with a screw. The end eye is mounted to the joining member by screwing the rod-shaped part of the end eye into the mounting screw hole of the joining member.

Also, regarding the rear cushion device of the related art configured as described above, a rear cushion device having a function of adjusting an entire length of the rear cushion device has been known. In the rear cushion device having an entire length adjusting function, it is possible to change a protruding amount of the rod-shaped part of the end eye from the mounting screw hole by changing a screwing amount of the rod-shaped part of the end eye into the mounting screw hole of the joining member. Thereby, it is possible to change an entire length (or a mounting length) of the rear cushion device upon no-load within a predetermined entire length adjustment range.

In the meantime, JP H06-048358 A discloses a device of mounting a rear shock absorber to a vehicle body, which can move a bracket coupled to the rear shock absorber relative to a vehicle body frame in a vertical direction.

However, according to the conventional rear cushion device having an entire length adjusting function, it is difficult to shorten an entire length of the rear cushion device (hereinafter, referred to as "entire length upon shortest length adjustment") when the entire length is adjusted to a shortest length by the entire length adjusting function, while sufficiently securing the entire length adjustment range.

That is, according to the conventional rear cushion device having an entire length adjusting function, the joining member extends downward beyond a length corresponding to a desired entire length adjustment range and the mounting screw hole formed in the joining member extends downward beyond the length corresponding to the entire length adjustment range, so that the screwing amount of the rod-shaped part of the end eye into the mounting screw hole can be changed within the entire length adjustment range. As a result, the entire length upon shortest length adjustment of the rear cushion device is long by a length corresponding to at least the entire length adjustment range. In the meantime, the screwing amount means an axial length of a portion, which is introduced into the mounting screw hole, of the rod-shaped part of the end eye.

Also, when the entire length adjusting function is provided, as the entire length of the rear cushion device is adjusted longer by the entire length adjusting function, a protruding amount of the rod-shaped part of the end eye from the mounting screw hole of the joining member increases. When the protruding amount increases, an external force (for example, an external force of bending a joining part between the rod-shaped part of the end eye and the mounting screw hole) to be applied to the joining part increases. When the entire length of the rear cushion device is adjusted to the longest length, the external force becomes greatest. In order to secure the rigidity against the external force, it is preferable to increase the screwing amount of the rod-shaped part of the end eye into the mounting screw hole when the entire length of the rear cushion device is adjusted to the longest length. As a result, in the conventional rear cushion device having an entire length adjusting function, in order to secure the rigidity when the entire length is adjusted to the longest length, the entire length upon shortest length adjustment may exceed the length corresponding to the entire length adjustment range.

Also, in the conventional rear cushion device having an entire length adjusting function, the lower end portion of the rod is fixed to the upper part of the joining member, the mounting screw hole for mounting the end eye is formed in the lower part of the joining member, and the rod-shaped part of the end eye is screwed into the mounting screw hole. For this reason, a lower end face of the rod and an upper end face of the rod-shaped part of the end eye mounted to the mounting screw hole face each other on the same axis line. Therefore, even though the mounting screw hole is extended upward to increase the screwing amount of the rod-shaped part of the end eye into the mounting screw hole so as to secure the entire length adjustment range, an upper end face of the rod-shaped part of the end eye collides with the lower end face of the rod, so that it is not possible to substantially increase the screwing amount of the rod-shaped part of the end eye. For this reason, in order to secure the entire length adjustment range, the mounting screw hole should be extended downward to increase the screwing amount of the rod-shaped part of the end eye into the mounting screw hole. As a result, the joining member should be configured to be long downward, so that the entire length upon shortest length adjustment of the rear cushion device increases. Like this, in the conventional rear cushion device having an entire length adjusting function, it is difficult to shorten the entire length upon shortest length adjustment of the rear cushion device while sufficiently securing the entire length adjustment range.

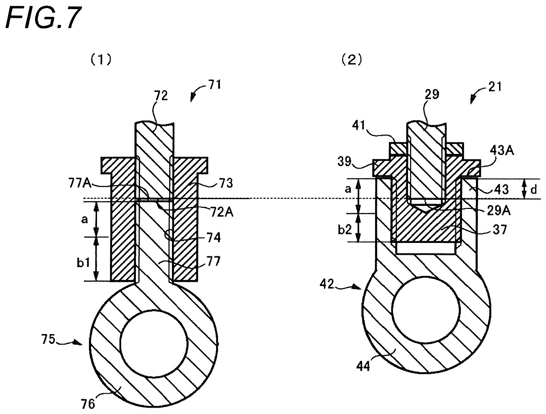

JP S63 125416 A discloses a rear cushion device for a motorcycle on which the preamble portion of claim 1 is based and which is similar to the rear cushion device shown in Fig.7(1).

EP 2 740 965 A1 discloses a damper which includes a vehicle-body-side mounting portion, an axle-side mounting portion, and a vehicle height adjusting mechanism for adjusting a distance between the vehicle-body-side mounting portion and the axle-side mounting portion. The vehicle height adjusting mechanism includes a first tubular member formed into a bottomed tubular shape, a second tubular member formed into a bottomed tubular shape and inserted from the bottom side into the first tubular member, and a stopper member having a shaft portion and a locking portion provided at a proximal end of the shaft portion. A distal end of the shaft portion is fixed to the bottom of the first tubular member. The shaft portion is inserted through a hole formed in the bottom of the second tubular member. The locking portion abuts on the bottom of the second tubular member. A lock nut and a tubular portion of the second tubular member are threadingly engaged with the outer periphery of a tubular portion of the first tubular member to form a double nut structure that prevents looseness.

### SUMMARY

It is therefore one of objects of the present disclosure to provide a rear cushion device having an entire length adjusting function capable of shortening an entire length upon shortest length adjustment while sufficiently securing an entire length adjustment range.

According to the present invention, there is provided a rear cushion device with the features of claim 1 to be mounted between a vehicle main body and a rear suspension arm of a straddle-type vehicle and comprising a spring for absorbing shock and a damper configured to attenuate vibrations of the spring, wherein the damper inter alia comprises: a cylinder; a piston provided in the cylinder; a rod having one end side connected to the piston in the cylinder and the other end side extending from the cylinder toward the other axial side; a cylinder-side mounting part provided at one axial end side of the cylinder and provided to mount the rear cushion device between the vehicle main body and the rear suspension arm; and a rod-side mounting part provided at the other axial end side of the rod and provided to mount the rear cushion device between the vehicle main body and the rear suspension arm, wherein the rod-side mounting part comprises: an inner member having a cylindrical shape, fixed to the other axial end side of the rod coaxially with the rod, and having an outer peripheral surface on which a screw is formed; and an outer member mounted to an outer peripheral side of the inner member, and wherein the outer member comprises: a tubular part having a tubular shape, and having an inner peripheral surface on which a screw to be screwed with the screw of the inner member is formed; and a coupling part for coupling the outer member to the vehicle main body or the rear suspension arm.

According to the present disclosure, it is possible to shorten the entire length upon shortest length adjustment while sufficiently securing the entire length adjustment range.

### BRIEF DESCRIPTION OF THE DRAWINGS

In the accompanying drawings:
FIG. 1 depicts an outer shape of a rear cushion device of an illustrative embodiment of the present disclosure;
FIG. 2 depicts a state in which the rear cushion device of the illustrative embodiment of the present disclosure is mounted to a straddle-type vehicle;
FIG. 3 is a perspective view depicting a lower end-side part of the rear cushion device of the illustrative embodiment of the present disclosure;
FIG. 4 is a longitudinal sectional view taken along a plane including an axis line of a rod, depicting a lower part of the rear cushion device of the illustrative embodiment of the present disclosure;
FIG. 5 is a cross sectional view depicting a rod-side mounting part of the rear cushion device of the illustrative embodiment of the present disclosure, as seen from an arrow V-V direction in FIG. 4;
FIG. 6 is a longitudinal sectional view depicting a lower end-side part of the rear cushion device of the illustrative embodiment of the present disclosure when an entire length is adjusted to about a longest length; and
FIG. 7 depicts a lower end-side part of a conventional rear cushion device having an entire length adjusting function and the lower end-side part of the rear cushion device of the illustrative embodiment of the present disclosure.

### DETAILED DESCRIPTION OF THE EMBODIMENTS

A rear cushion device of the illustrative embodiment of the present disclosure is a rear cushion device that is to be mounted between a vehicle main body and a rear suspension arm of a straddle-type vehicle, and includes a spring for absorbing shock and a damper configured to attenuate vibrations of the spring.

The damper includes a cylinder, a piston, a rod, a cylinder-side mounting part, and a rod-side mounting part. The piston is provided in the cylinder. The rod has one end connected to the piston in the cylinder and the other end extending from the cylinder toward the other axial side. The cylinder-side mounting part and the rod-side mounting part have, respectively, a function of mounting the rear cushion device between the vehicle main body and the rear suspension arm. The cylinder-side mounting part is provided to one axial end side of the cylinder, and the rod-side mounting part is provided to the other axial end side of the rod.

The rod-side mounting part has an inner member and an outer member. The inner member has a cylindrical shape, is fixed to the other axial end side of the rod coaxially with the rod, and has an outer peripheral surface on which a screw is formed. The outer member has a tubular shape, and includes a tubular part having an inner peripheral surface on which a screw to be screwed with the screw of the inner member is formed, and a coupling part for coupling the outer member to the vehicle main body or the rear suspension arm. The outer member is mounted to the inner member by screwing the tubular part to the outer peripheral side of the inner member.

The rear cushion device of the illustrative embodiment of the present disclosure has a function of adjusting an entire length of the rear cushion device by changing a screwing amount of the inner member into the tubular part. Meanwhile, herein, the screwing amount means an axial length of a part, which is introduced into the tubular part, of the inner member.
According to the rear cushion device of the illustrative embodiment of the present disclosure, it is possible to change the screwing amount of the inner member into the tubular part within a predetermined entire length adjustment range of the rear cushion device. Also, according to the rear cushion device of the illustrative embodiment of the present disclosure, the screwing amount of the inner member into the tubular part is secured so that the rigidity against an external force to be applied to a joining part between the inner member and the tubular part is secured when the entire length of the rear cushion device is adjusted to a longest length. That is, an axial length of each of the inner member and the tubular part is set to a length or longer obtained by summing the predetermined entire length adjustment range and a screwing amount for securing the rigidity when the entire length of the rear cushion device is adjusted to the longest length.

According to the rear cushion device of the illustrative embodiment of the present disclosure configured as described above, the inner member is fixed to the other axial end side of the rod, and the tubular part of the outer member is screwed to the outer peripheral side of the inner member. Accordingly, it is possible to arrange a portion of the part, to which the tubular part of the outer member is screwed, of the inner member at a position closer to one axial side than the other axial end face of the rod. Thereby, it is possible to screw the inner member into the tubular part so that one end face of the tubular part reaches a position closer to one side beyond the other end face of the rod. As a result, when the inner member is screwed into the tubular part until the screwing amount becomes greatest, and the entire length of the rear cushion device is adjusted to the shortest length, one end face of the tubular part can be located at a position closer to one axial side than the other end face of the rod. Therefore, the entire length upon shortest length adjustment of the rear cushion device is shorter by a distance between one end face of the tubular part, which is located at the position closer to one axial side than the other end face of the rod, and the other end face of the rod, as compared to the entire length upon shortest length adjustment of the conventional rear cushion device having an entire length adjusting function.

Also, the axial length of each of the inner member and the tubular part is set to the length or longer obtained by summing the predetermined entire length adjustment range and the screwing amount for securing the rigidity when the entire length of the rear cushion device is adjusted to the longest length. Thereby, it is possible to secure the predetermined entire length adjustment range, and the rigidity when the entire length of the rear cushion device is adjusted to the longest length.

As described above, according to the rear cushion device of the illustrative embodiment of the present disclosure, it is possible to shorten the entire length upon shortest length adjustment while sufficiently securing the entire length adjustment range.

Also, according to the rear cushion device of the illustrative embodiment of the present disclosure, the inner member is fixed to the other axial end side of the rod, and the tubular part of the outer member is screwed to the outer peripheral side of the inner member. Therefore, it is possible to improve the rigidity of the joining part between the inner member and the tubular part by increasing an outer diameter of the inner member, as compared to the rigidity of the joining part between the rod-shaped part of the end eye and the mounting screw hole of the conventional rear cushion device. Accordingly, while securing the rigidity against the external force to be applied to the joining part between the inner member and the tubular part when the entire length of the rear cushion device is adjusted to the longest length, it is possible to reduce the screwing amount of the inner member into the tubular part, as compared to the screwing amount of the rod-shaped part of the end eye into the mounting screw hole in the conventional rear cushion device. Thereby, it is possible to shorten the entire length upon shortest length adjustment of the rear cushion device.

### [Illustrative Embodiment]

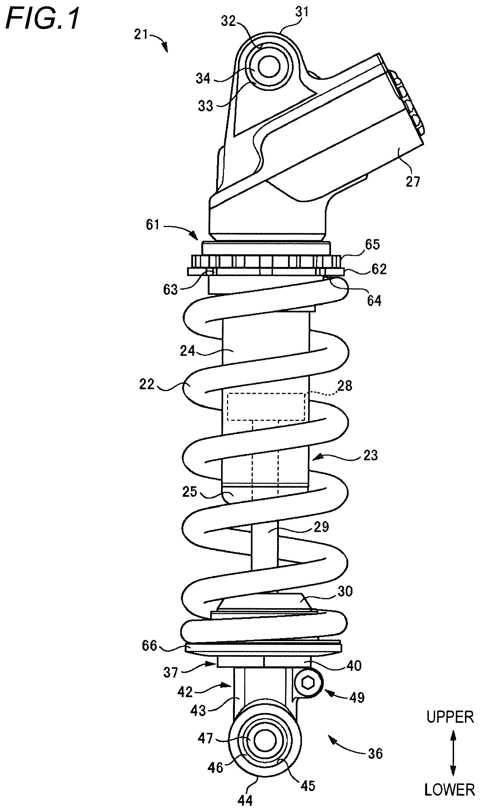

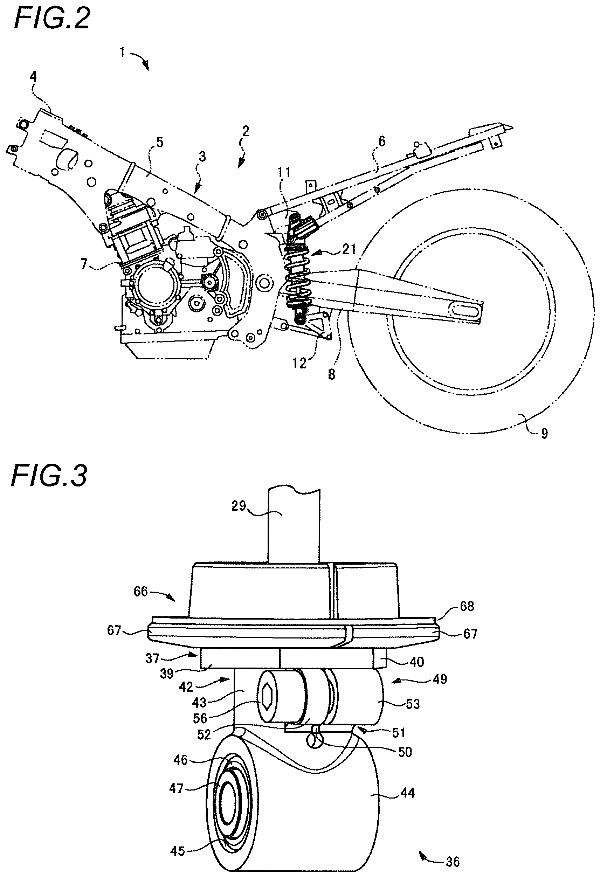

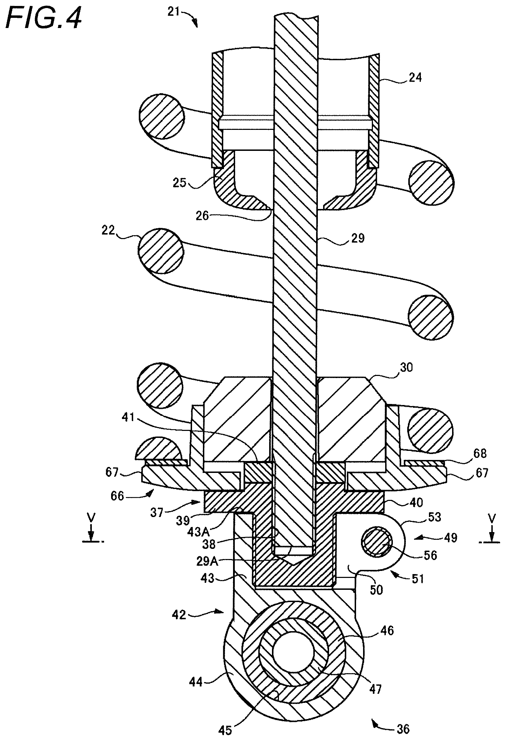

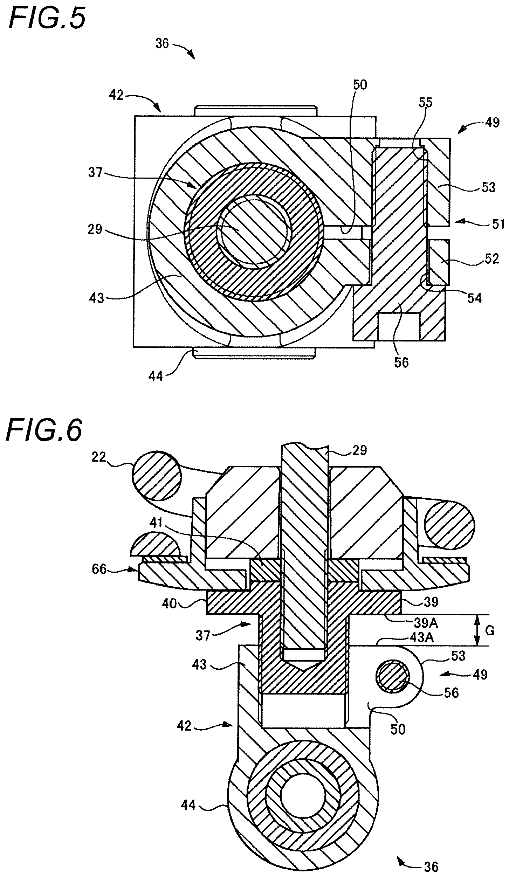

FIG. 1 depicts a rear cushion device 21 of an illustrative embodiment of the present disclosure. FIG. 2 depicts a state in which the rear cushion device is mounted to a straddle-type vehicle 1. FIG. 3 depicts a lower end-side part of the rear cushion device 21. FIG. 4 is a longitudinal sectional view taken along a plane including an axis line of a rod 29, depicting a lower part of the rear cushion device 21. FIG. 5 is a cross sectional view depicting a rod-side mounting part 36 of the rear cushion device 21, as seen from an arrow V-V direction in FIG. 4.

FIG. 6 depicts a lower end-side part of the rear cushion device 21 when an entire length is adjusted to about a longest length.

The rear cushion device 21 is a device that is provided to the straddle-type vehicle 1 such as a motorcycle and is configured to absorb shock due to irregularity of road surface and the like. Also, the rear cushion device 21 has an entire length adjusting function. According to the rear cushion device 21, it is possible to change an entire length of the rear cushion device 21 upon no-load within a predetermined entire length adjustment range, and to change a bank angle of the straddle-type vehicle 1 or a posture of the straddle-type vehicle 1.

As shown in FIG. 1, the rear cushion device 21 includes a spring 22 for absorbing the shock and a damper 23 configured to attenuate vibrations of the spring 22. The damper 23 includes a cylinder 24, a reservoir tank 27, a piston 28, a rod 29, a cylinder-side mounting part 31 and a rod-side mounting part 36.

As shown in FIG. 2, the rear cushion device 21 is mounted between a vehicle main body 2 and a rear suspension arm 8 of the straddle-type vehicle 1. Herein, the straddle-type vehicle 1 includes a vehicle body frame 3 having a head pipe 4, a main frame 5, a seat rail 6 and the like. An engine 7 is supported to the main frame 5. Also, although not shown, a fuel tank is provided above the main frame 5, and a seat is provided above the seat rail 6. The vehicle main body 2 indicates a part of the straddle-type vehicle 1 including the vehicle body frame 3, the engine 7, the fuel tank and the seat. In the meantime, the rear suspension arm 8 (swing arm) is supported to be vertically swingable to a rear lower part of the main frame 5, and a rear wheel 9 is supported to a rear end portion of the rear suspension arm 8. Also, although not shown, a steering shaft is supported to the head pipe 4, front forks and a handle are supported to the steering shaft, and a front wheel is supported to the front forks. In the illustrative embodiment, the cylinder-side mounting part 31 of the damper 23 is coupled to a bracket 11 provided at a rear upper part of the main frame 5, and the rod-side mounting part 36 of the damper 23 is coupled to a lower part of the rear suspension arm 8 via a link mechanism 12, so that the rear cushion device 21 is supported between the vehicle main body 2 and the rear suspension arm 8.

Also, the rear cushion device 21 is mounted between the vehicle main body 2 and the rear suspension arm 8 so that the cylinder 24 of the damper 23 is arranged at an upper side and a part of the rod 29 of the damper 23 protruding from the cylinder 24 is arranged at a lower side. In the illustrative embodiment, when describing shapes, arrangements and the like of the respective parts of the rear cushion device 21, it is presumed that the rear cushion device 21 is mounted in the above-described direction (refer to an arrow in the right lower part in FIG. 1). However, the mounting direction of the rear cushion device 21 is different depending on a type of the straddle-type vehicle and a structure of a specific product, and the mounting direction shown in FIG. 2 is just exemplary.

In the damper 23 shown in FIG. 1, the cylinder 24 is made of a metal material and has a tubular shape. Also, an upper end portion of the cylinder 24 is provided with the reservoir tank 27. Also, a cap 25 is mounted to a lower end portion of the cylinder 24. As shown in FIG. 4, the cap 25 is formed with an insertion hole 26 for inserting therein the rod 29. Also, the cylinder 24 is provided therein with the piston 28. Also, oil is in the cylinder 24, so that a gas chamber is formed in the reservoir tank 27. For the cylinder 24, the reservoir tank 27 and the piston 28, the well-known configurations can be used. Meanwhile, in FIG. 1, the specific shape of the piston is not shown.

The rod 29 is formed of a metallic rod material, and an upper end side thereof is introduced into the cylinder 24 through the insertion hole 26 formed in the cap 25 of the cylinder 24, and an end portion thereof is connected to the piston 28. Also, a lower end side of the rod 29 extends downward from the cylinder 24. Also, as shown in FIG. 4, an outer peripheral surface of the lower end portion of the rod 29 is formed with a screw for mounting and fixing thereto a fixing member 41 and an inner member 37, which will be described later. Also, an outer peripheral side of a lower end-side part of the rod 29 is provided with a bump stopper 30 made of rubber, for example. The bump stopper 30 is a member for preventing the rod-side mounting part 36 and the cap 25 of the cylinder 24 from directly contacting each other upon contraction of the rod 29. Meanwhile, in FIG. 3, the bump stopper 30 is not shown.

The cylinder-side mounting part 31 is provided at the upper end portion of the cylinder 24. The cylinder-side mounting part 31 is a part for mounting the rear cushion device 21 between the vehicle main body 2 and the rear suspension arm 8 of the straddle-type vehicle 1. The cylinder-side mounting part 31 has a mounting hole 32, and the mounting hole 32 is provided with a bearing 33 and a tubular collar 34. The cylinder-side mounting part 31 is coupled to the bracket 11 (refer to FIG. 2) provided at the rear upper side of the main frame 5, via the bearing 33, the collar 34, and a coupling bolt (not shown).

The rod-side mounting part 36 is provided at the lower end portion of the rod 29. The rod-side mounting part 36 has functions of mounting the rear cushion device 21 between the vehicle main body 2 and the rear suspension arm 8 of the straddle-type vehicle 1 and adjusting an entire length of the rear cushion device 21. As shown in FIG. 4, the rod-side mounting part 36 includes an inner member 37, a fixing member 41, an outer member 42 and an adjustment/fixing switching mechanism 49.

The inner member 37 is made of a metal material or the like and has a cylindrical shape, and a diameter thereof is greater than a diameter of the rod 29. Also, the inner member 37 is arranged coaxially with the rod 29. Also, the inner member 37 is formed with a rod insertion hole 38 in which the lower end portion of the rod 29 is inserted to join the rod 29 and the inner member 37. The rod insertion hole 38 is located coaxially with the rod 29, and opens to a center of an upper surface of the inner member 37. Also, an inner peripheral surface of the rod insertion hole 38 is formed with a screw for screwing the inner member 37 to the lower end portion of the rod 29. In the meantime, as shown in FIG. 4, the rod insertion hole 38 does not penetrate the inner member 37. However, the rod insertion hole 38 may be formed to penetrate the inner member 37.

Also, a part ranging from an axially intermediate part to a lower end portion of an outer peripheral surface of the inner member 37 (i.e., a part lower than a collar part 39, which will be described later) is formed with a screw for mounting thereto the tubular part 43 of the outer member 42.

Also, an upper end-side part of the inner member 37 is formed with the collar part 39 (protruding part) protruding outward radially from the upper end-side part over an entire circumference thereof. An upper surface of the collar part 39 has a wide area enough to place and support thereon a pair of receiving pieces 67 of a spring receiving unit 66, which will be described later.

Also, as shown in FIG. 3, an outer peripheral side of the collar part 39 is formed with a tool engaging part 40 to which a tool for rotating the inner member 37 about an axis line thereof is to be engaged. The tool engaging part 40 has a hexagonal shape similar to a hexagonal nut, for example. That is, an overall outer shape of the collar part 39 is a hexagonal shape. In the meantime, the specific shape of the tool engaging part 40 is not limited to the hexagonal shape and may be another polygonal shape, and the tool engaging part 40 may be configured to form a concave part or a convex part at a part of the outer peripheral surface of the collar part 39.

The fixing member 41 is a member for fixing the inner member 37 to the lower end portion of the rod 29. The fixing member 41 is a hexagonal nut, for example, and is arranged at an upper side of the inner member 37. The fixing member 41 and the inner member 37 are screwed to the rod 29 in corresponding order. That is, the fixing member 41 is screwed to an upper part of the part, at which the screw is formed, of the lower end portion of the rod 29. Also, a lower part of the part, at which the screw is formed, of the lower end portion of the rod 29, i.e., the lowest end portion of the rod 29 is screwed into the rod insertion hole 38, so that the inner member 37 is mounted to the corresponding part. Also, the fixing member 41 is fastened to the inner member 37, so that the inner member 37 is fixed to the lowest end portion of the rod 29. The inner member 37 is rigidly fixed to the rod 29 by the fixing member 41. Therefore, as described later, when the inner member 37 is rotated using the tool upon entire length adjustment of the rear cushion device 21, the inner member 37, the fixing member 41 and the rod 29 are integrally rotated.

As shown in FIGS. 3 and 4, the outer member 42 has a tubular part 43 formed at an upper part of the outer member 42 and a coupling part 44 formed at a lower part of the outer member 42. The tubular part 43 and the coupling part 44 are made of a metal material or the like, and both are integrally formed.

The tubular part 43 is formed with a slit 50 at a part of a peripheral wall thereof. However, the tubular part 43 has a cylindrical shape as a whole, and is arranged coaxially with the rod 29. An outer diameter of the tubular part 43 is greater than an outer diameter of the part, which is lower than the collar part 39, of the inner member 37. Also, an inner diameter of the tubular part 43 is the same as the outer diameter of the part, which is lower than the collar part 39, of the inner member 37. Also, an inner peripheral surface of the tubular part 43 is formed with a screw that is screwed with the screw formed on the outer peripheral surface of the inner member 37. The outer member 42 is mounted to an outer peripheral side of the inner member 37 by inserting and screwing the part ranging from the axially intermediate part to the lower end portion of the inner member 37 (the part, which is lower than the collar part 39, of the inner member 37) into the tubular part 43.

Also, an axial length of each of the part, which is lower than the collar part 39, of the inner member 37 and the tubular part 43 is set to a length or longer obtained by summing the predetermined entire length adjustment range and a screwing amount of the inner member 37 into the tubular part 43 when the entire length of the rear cushion device 21 is adjusted to a longest length. Also, as shown in FIG. 4, the axial length of the tubular part 43 is set so that an upper end face 43A of the tubular part 43 is positioned above a lower end face 29A of the rod 29 in a state where the entire length of the rear cushion device 21 is adjusted to the shortest length.

The coupling part 44 is a part for mounting the rear cushion device 21 between the vehicle main body 2 and the rear suspension arm 8 of the straddle-type vehicle 1. As shown in FIG. 3, the coupling part 44 has a cylindrical outer shape having an axis line perpendicular to the axis line of the rod 29, and a part of an outer peripheral part thereof is joined to the tubular part 43. Also, the coupling part 44 is formed with a mounting hole 45 penetrating the coupling part 44 in an axis line direction, and the mounting hole 45 is provided therein with a bearing 46 and a tubular collar 47. The coupling part 44 is coupled to the link mechanism 12 (refer to FIG. 2) via the bearing 46, the collar 47, and a coupling bolt (not shown).

The adjustment/fixing switching mechanism 49 is a mechanism configured to switch a state in which the entire length of the rear cushion device 21 can be adjusted and a state in which the entire length of the rear cushion device 21 is fixed. That is, the rear cushion device 21 has a function of adjusting the entire length of the rear cushion device 21 by rotating the inner member 37 relative to the outer member 42 about the axis line of the rod 29 to thereby change the screwing amount of inner member 37 into the tubular part 43. The adjustment/fixing switching mechanism 49 is a mechanism configured to switch on and off states of the corresponding function. Specifically, the adjustment/fixing switching mechanism 49 is configured to switch a state in which the screwing amount of inner member 37 into the tubular part 43 can be adjusted by rotating the inner member 37 relative to the tubular part 43 of the outer member 42 and a state in which the screwing amount of inner member 37 into the tubular part 43 is fixed by fixing the inner member 37 so as not to be rotatable relative to the tubular part 43. Meanwhile, in the illustrative embodiment, the screwing amount means an axial length of a part, which is introduced in the tubular part 43, of the inner member 37.

As shown in FIG. 5, the adjustment/fixing switching mechanism 49 has the slit 50 formed in the part of the peripheral wall of the tubular part 43, and a fastening mechanism 51 configured to fasten the inner member 37 by the tubular part 43.

The slit 50 is formed from an upper end to a lower end (bottom) of the part of the peripheral wall of the tubular part 43. A part of the tubular part 43 is cut by the slit 50.

The fastening mechanism 51 includes a pair of fastening parts 52, 53, each of which is provided at one part and the other part of the peripheral wall of the tubular part 43 cut by the slit 50, and a fastening bolt 56 configured to contract a diameter of the tubular part 43 by bringing the fastening parts 52, 53 close to each other. The pair of fastening parts 52, 53 protrudes from one part and the other part of the peripheral wall of the cut tubular part 43 in a horizontal direction, respectively, and faces each other. One fastening part 52 is formed therein with a bolt insertion hole 54 through which the fastening bolt 56 is to pass, and the other fastening part 53 is formed therein with a bolt screw hole 55 into which the fastening bolt 56 is to be screwed. The fastening bolt 56 is inserted in the bolt insertion hole 54 and is screwed to the bolt screw hole 55.

When a user untightens the fastening bolt 56 by using a tool such as a wrench, the tubular part 43 is in a state where deformation is not caused (the diameter is not contracted) and the pair of fastening parts 52, 53 is spaced from each other. In this state, the inner member 37 can rotate relative to the tubular part 43. The user can engage a tool such as a spanner to the tool engaging part 40 and rotate the inner member 37 relative to the tubular part 43 by the tool. As shown in FIG. 4, the user can shorten the entire length of the rear cushion device 21 by increasing the screwing amount of the inner member 37 into the tubular part 43. Also, as shown in FIG. 6, the user can increase the entire length of the rear cushion device 21 by reducing the screwing amount of the inner member 37 into the tubular part 43. On the other hand, when the user tightens the fastening bolt 56, the pair of fastening parts 52, 53 comes close to each other, and the tubular part 43 is elastically deformed, so that the diameter thereof is contracted. In this state, the inner member 37 is tightened by the tubular part 43, so that the inner member 37 cannot rotate relative to the tubular part 43 and the inner member 37 is fixed to the outer member 42. Thereby, for example, during traveling of the straddle-type vehicle 1, the rear cushion device 21 is prevented from rattling between the vehicle main body 2 and the rear suspension arm 8 and an adjustment amount of the entire length of the rear cushion device 21 is prevented from being varied due to vibrations.

In the meantime, as shown in FIG. 1, the spring 22 is a coil spring made of metal or the like, and is arranged on the outer peripheral side of the damper 23. Also, the rear cushion device 21 includes a preload adjusting mechanism 61 and a spring receiving unit 66, as a configuration relating to the spring 22.

The preload adjusting mechanism 61 is a mechanism for setting a preload (initial load) of the spring 22, and includes a preload adjustor 62 and a preload adjustor nut 65.

The preload adjustor 62 is a ring-shaped member made of metal or the like, and is formed on an inner peripheral surface with a screw and on an outer peripheral surface with a concave part 63 for engaging with the tool. In the meantime, an outer peripheral surface of an upper part of the cylinder 24 is formed with a screw, and the preload adjustor 62 is screwed to the part of the cylinder 24 on which the screw is formed. Also, the preload adjustor 62 is formed with a receiving surface 64 configured to contact and support an upper end portion of the spring 22.

The preload adjustor nut 65 is a metallic ring-shaped member for fixing the preload adjustor 62. The preload adjustor nut 65 is formed on an inner peripheral surface with a screw and on an outer peripheral surface with an irregularity for engaging with the tool. The preload adjustor nut 65 is screwed to an upper position of the preload adjustor 62 at the upper part, on which the screw is formed, of the cylinder 24. The user can adjust the preload of the spring 22 by unfastening the preload adjustor nut 65 and then rotating the preload adjustor 62 with the tool.

In the meantime, the spring receiving unit 66 is a unit for contacting and supporting the lower end portion of the spring 22. As shown in FIGS. 3 and 4, the spring receiving unit 66 is provided at an outer peripheral side of a lower end-side part of the rod 29. The spring receiving unit 66 is formed by arranging a pair of half ring-shaped receiving pieces 67 made of metal or the like on the collar part 39 of the inner member 37 to face each other and mounting a receiving plate 68, which is a ring-shaped thin plate made of metal of the like, on upper surfaces of outer peripheral sides of the receiving pieces 67.

As described above, according to the rear cushion device 21 of the illustrative embodiment of the present disclosure, since the inner member 37 is fixed to the lower end portion of the rod 29 and the tubular part 43 of the outer member 42 is screwed to the outer peripheral side of the inner member 37, it is possible to shorten the entire length of the rear cushion device 21 upon shortest length adjustment while sufficiently securing the entire length adjustment range. In the below, the operational effects are described with reference to FIG. 7.
(1) of FIG. 7 depicts a lower end-side part of the conventional rear cushion device having an entire length adjusting function, and (2) of FIG. 7 depicts a lower end-side part of the rear cushion device 21 of the illustrative embodiment of the present disclosure. The rear cushion device 71 in (1) of FIG. 7 and the rear cushion device 21 in (2) of FIG. 7 are adjusted so that the entire length is shortest. Also, in FIG. 7, the rear cushion device 71 and the rear cushion device 21 are arranged so that positions of the lower end faces 72A, 29A of the rods 72, 29 are aligned in line, respectively.

As shown in (1) of FIG. 7, in the rear cushion device 71 having an entire length adjusting function, an end eye 75 is joined to a lower end portion of the rod 72 via a joining member 73. That is, the joining member 73 is a member of which an outer shape is a cylindrical shape and an outer diameter is greater than the rod 72. The joining member 73 is arranged coaxially with the rod 72, and an upper part of the joining member 73 is fixed to a lower end portion of the rod 72. Also, a lower part of the joining member 73 is formed with a mounting screw hole 74 for mounting therein the end eye 75. The mounting screw hole 74 is coaxial with the rod 72, and opens to a center of a lower end face of the joining member 73. Also, the end eye 75 has a ring-shaped part 76 having a bolt insertion hole for mounting the end eye to a bracket formed at the rear suspension arm by using a coupling bolt, and a rod-shaped part 77 protruding upward from an outer periphery part of the ring-shaped part 76 and having substantially the same diameter as the rod 72, and an outer peripheral surface of the rod-shaped part 77 is formed with a screw. The end eye 75 is mounted to the joining member 73 by screwing the rod-shaped part 77 of the end eye 75 into the mounting screw hole 74 of the joining member 73. Also, in the rear cushion device 71, a predetermined entire length adjustment range is 'a', and a screwing amount for securing the rigidity of the rod-shaped part 77 of the end eye 75 relative to the mounting screw hole 74 when an entire length of the rear cushion device 71 is adjusted to a longest length is b1'. For this reason, a depth of the mounting screw hole 74 is a value having 'a' and 'b1' added thereto.

In the rear cushion device 71, the lower end face 72A of the rod 72 and the upper end face 77A of the rod-shaped part 77 of the end eye 75 mounted in the mounting screw hole 74 face each other on the same axis line. Therefore, even though it is intended to increase the screwing amount of the rod-shaped part 77 of the end eye 75 into the mounting screw hole 74 without changing an axial length of the joining member 73 so as to secure the entire length adjustment range, the upper end face 77A of the rod-shaped part 77 of the end eye 75 collides with the lower end face 72A of the rod 72, so that it is not possible to substantially increase the screwing amount of the rod-shaped part 77 of the end eye 75. For this reason, in order to secure the entire length adjustment range, the joining member 73 should be made long downward and the mounting screw hole 74 should be extended downward to increase the screwing amount of the rod-shaped part 77 of the end eye 75 into the mounting screw hole 74, so that the entire length upon shortest length adjustment of the rear cushion device 71 increases.

On the other hand, as shown in (2) of FIG. 7, the rear cushion device 21 of the illustrative embodiment of the present disclosure has the configuration where the inner member 37 is fixed to the lower end portion of the rod 29 and the tubular part 43 of the outer member 42 is screwed to the outer peripheral side of the inner member 37. According to this configuration, the upper side part of the part, to which the tubular part 43 of the outer member 42 is screwed, of the inner member 37 can be arranged at a position higher than the lower end face 29A of the rod 29. Thereby, the inner member 37 can be screwed into the tubular part 43 so that the upper end face 43A of the tubular part 43 reaches a more upward side beyond the lower end face 29A of the rod 29. As a result, when the inner member 37 is screwed into the tubular part 43 until the screwing amount becomes greatest, and the entire length of the rear cushion device 21 is adjusted to the shortest length, the upper end face 43A of the tubular part 43 can be arranged at a position higher than the lower end face 29A of the rod 29. Therefore, the entire length upon shortest length adjustment of the rear cushion device 21 is shorter by a distance d between the upper end face 43A of the tubular part 43, which is located at the position higher than the lower end face 29A of the rod 29, and the lower end face 29A of the rod 29, as compared to the entire length upon shortest length adjustment of the conventional rear cushion device 71.

Also, in the rear cushion device 21 of the illustrative embodiment of the present disclosure shown in (2) of FIG. 7, the entire length adjustment range is 'a', which is the same as the conventional rear cushion device 71. Also, in the rear cushion device 21 of the illustrative embodiment of the present disclosure, the screwing amount for securing the rigidity of the inner member 37 relative to the tubular part 43 when the entire length of the rear cushion device 21 is adjusted to the longest length is 'b2'. The respective lengths of the part, which is lower than the collar part 39, of the inner member 37 and the tubular part 43 are set as values having 'a' and 'b2' added thereto. Thereby, in the rear cushion device 21 of the illustrative embodiment of the present disclosure, the predetermined entire length adjustment range, and the rigidity when the entire length of the rear cushion device 21 is adjusted to the longest length are respectively secured.

Like this, according to the rear cushion device 21 of the illustrative embodiment of the present disclosure, it is possible to shorten the entire length upon shortest length adjustment while sufficiently securing the entire length adjustment range.

Also, according to the rear cushion device 21 of the illustrative embodiment of the present disclosure, an outer diameter of the inner member 37 is greater than the diameter of the rod 29. Therefore, while securing the rigidity against the external force to be applied to the joining part between the inner member 37 and the tubular part 43 when the entire length of the rear cushion device 21 is adjusted to the longest length, it is possible to reduce the screwing amount (b2) of the inner member 37 into the tubular part 43, as compared to the screwing amount (b1) of the rod-shaped part 77 of the end eye 75 into the mounting screw hole 74 in the conventional rear cushion device 71. Thereby, it is also possible to shorten the entire length upon shortest length adjustment of the rear cushion device 21.

Also, according to the rear cushion device 21 of the illustrative embodiment of the present disclosure, when the rod-side mounting part 36 is provided with the adjustment/fixing switching mechanism 49, it is possible to easily arrange the adjustment/fixing switching mechanism 49 at a place, which is easily accessible by an operator, of the straddle-type vehicle 1. Thereby, the operator can easily switch on and off states of the entire length adjusting function.

Also, according to the rear cushion device 21 of the illustrative embodiment of the present disclosure, since the adjustment/fixing switching mechanism 49 includes the slit 50 formed in the tubular part 43 and the fastening mechanism 51 configured to contract the diameter of the tubular part 43 by tightening the tubular part 43 in the circumferential direction, it is possible to easily implement the adjustment/fixing switching mechanism 49.

Also, according to the rear cushion device 21 of the illustrative embodiment of the present disclosure, since the outer peripheral side of the collar part 39 of the inner member 37 is formed with the tool engaging part 40 for engaging with the tool for rotating the inner member 37, the operator can easily adjust the entire length of the rear cushion device 21 by using the tool.

Also, according to the rear cushion device 21 of the illustrative embodiment of the present disclosure, as shown in FIG. 6, a distance G between a lower surface 39A of the collar part 39 of the outer member 42 and the upper end face 43A of the tubular part 43 is changed, in correspondence to the screwing amount of the inner member 37 into the tubular part 43. Since both the collar part 39 and the tubular part 43 are exposed outside, the operator can measure the distance G between the lower surface 39A of the collar part 39 and the upper end face 43A of the tubular part 43 with naked eyes or a measurement device, so that it is possible to easily check an adjustment amount of the entire length of the rear cushion device 21.

In the above illustrative embodiment, the adjustment/fixing switching mechanism 49 is configured to fix the inner member 37 in the tubular part 43 by tightening the tubular part 43 having the slit 50 formed therein with the fastening bolt 56. However, the configuration of the adjustment/fixing switching mechanism 49 is not limited thereto. The adjustment/fixing switching mechanism 49 may be configured to fix the inner member 37 to the tubular part 43 by forming a part of the peripheral wall of the tubular part 43 with a small-diameter screw hole penetrating the same in a radial direction, screwing a lock bolt into the screw hole, and tightening the lock bolt to press an end portion of the lock bolt to the outer peripheral surface of the inner member 37.

Also, in the above illustrative embodiment, the coupling part 44 has a cylindrical outer shape having an axis line perpendicular to the axis line of the rod 29, and the bearing 46 and the collar 47 are provided in the mounting hole 45. However, the coupling part 44 may be formed to have a U-like bracket shape. Also, the cylinder-side mounting part 31 may be formed to have a U-like bracket shape.

Also, in the above illustrative embodiment, as shown in FIG. 2, the rear cushion device of the present disclosure is applied to a so-called mono shock-type rear suspension. However, the rear cushion device of the present disclosure can be applied to a twin shock-type rear suspension, too. Also, the rear cushion device of the present disclosure can be applied to a variety of straddle-type vehicles such as a three-wheeled vehicle, a buggy car, a bicycle and the like, without being limited to the motorcycle.

## Claims

1. A rear cushion device (21) to be mounted between a vehicle main body (2) and a rear suspension arm (8) of a straddle-type vehicle (1) and comprising a spring (22) for absorbing shock and a damper (23) configured to attenuate vibrations of the spring (22),
wherein the damper (23) comprises:
a cylinder (24);
a piston (28) provided in the cylinder (24);
a rod (29) having one axial end side connected to the piston (28) in the cylinder (24) and the other axial end side extending from the cylinder (24) toward the other axial side;
a cylinder-side mounting part (31) provided at one axial end side of the cylinder (24) and provided to mount the rear cushion device (21) between the vehicle main body (2) and the rear suspension arm (8); and
a rod-side mounting part (36) provided at the other axial end side of the rod (29) and provided to mount the rear cushion device (21) between the vehicle main body (2) and the rear suspension arm (8),
**characterized in that**
the rod-side mounting part (36) comprises:
an inner member (37) having a cylindrical shape, fixed to the other axial end side of the rod (29) coaxially with the rod (29), and having an outer peripheral surface on which a screw is formed; and
an outer member (42) mounted to an outer peripheral side of the inner member (37), wherein the outer member (42) comprises:
a tubular part (43) having a tubular shape, and having an inner peripheral surface on which a screw to be screwed with the screw of the inner member (37) is formed so that, by adjusting the screwing amount of the inner member (37) into the tubular part (43), an entire length of the rear cushion device (21) can be adjusted; and
a coupling part (44) integrally joined to the tubular part (43) of the outer member (42) for coupling the outer member (42) to the vehicle main body (2) or the rear suspension arm (8);
the rod-side mounting part (36) comprises an adjustment/fixing switching mechanism (49) capable of switching a state in which a screwing amount of the inner member (37) into the tubular part (43) can be adjusted by rotating the inner member (37) relative to the tubular part (43) and a state in which the screwing amount of the inner member (37) into the tubular part (43) is fixed by fixing the inner member (37) so as not to be rotatable relative to the tubular part (43); and
the adjustment/fixing switching mechanism (49) comprises:
a slit (50) formed in a peripheral wall of the tubular part (43) and configured to enable a diameter of the tubular part (43) to be contracted; and
a fastening mechanism (51) configured to contract the diameter of the tubular part (43) by tightening the tubular part (43) in a circumferential direction.

2. The rear cushion device (21) according to claim 1, wherein the outer peripheral side of the inner member (37) is formed with a tool engaging part (40) to which a tool for rotating the inner member (37) is to be engaged.

3. The rear cushion device (21) according to claim 1 or 2, wherein, when a screwing amount of the inner member (37) into the tubular part (43) is greatest, one end face (43A) of the tubular part (43) is located at a side closer to one axial side of the rear cushion device (21) than an end face (29A) of the rod (29) at the other axial end side of the rod (29).

4. The rear cushion device (21) according to any one of claims 1 to 3, wherein one end-side part of the inner member (37) is formed with a protrusion protruding outward in a radial direction and a surface of the protrusion facing toward the other axial side faces one end face (43A) of the tubular part (43).

5. The rear cushion device (21) according to any one of claims 1 to 4, wherein an outer diameter of the inner member (37) is greater than an outer diameter of the rod (29).

## Patentansprüche

1. Eine hintere Dämpfungsvorrichtung (21), die zwischen einem Fahrzeug-Hauptkörper (2) und einem hinteren Aufhängungsarm (8) eines Fahrzeugs (1) vom Spreizsitztyp zu montieren ist und eine Feder (22) zum Absorbieren von Stößen und einen Dämpfer (23) umfasst, der konfiguriert ist, um Schwingungen der Feder (22) zu dämpfen,
wobei der Dämpfer (23) umfasst:
einen Zylinder (24),
einen Kolben (28), der in dem Zylinder (24) vorgesehen ist,
eine Stange (29), deren eine axiale Endseite mit dem Kolben (28) in dem Zylinder (24) verbunden ist und deren andere axiale Endseite sich von dem Zylinder (24) in Richtung der anderen axialen Seite erstreckt,
ein zylinderseitiges Befestigungsteil (31), das an einer axialen Endseite des Zylinders (24) vorgesehen ist und vorgesehen ist, um die hintere Dämpfungsvorrichtung (21) zwischen dem Fahrzeughauptkörper (2) und dem hinteren Aufhängungsarm (8) zu befestigen, und
ein stangenseitiges Befestigungsteil (36), das an der anderen axialen Endseite der Stange (29) vorgesehen ist und vorgesehen ist, um die hintere Dämpfungsvorrichtung (21) zwischen dem Fahrzeughauptkörper (2) und dem hinteren Aufhängungsarm (8) zu befestigen,
**dadurch gekennzeichnet, dass**
das stangenseitige Befestigungsteil (36) umfasst:
ein inneres Element (37) mit einer zylindrischen Form, das an der anderen axialen Endseite der Stange (29) koaxial mit der Stange (29) befestigt ist und eine äußere Umfangsoberfläche aufweist, an der ein Gewinde ausgebildet ist, und
ein äußeres Element (42), das an einer äußeren Umfangsseite des inneren Elements (37) angebracht ist, wobei das äußere Element (42) umfasst
ein rohrförmiges Teil (43) mit einer rohrförmigen Form und mit einer inneren Umfangsoberfläche, an der ein Gewinde ausgebildet ist, das mit dem Gewinde des inneren Elements (37) verschraubt werden soll, so dass durch Einstellen des Einschraubbetrags des inneren Elements (37) in das rohrförmige Teil (43) eine gesamte Länge der hinteren Dämpfungsvorrichtung (21) eingestellt werden kann, und
ein Kupplungsteil (44), das einstückig mit dem rohrförmigen Teil (43) des Außenelements (42) verbunden ist, um das Außenelement (42) mit dem Fahrzeughauptkörper (2) oder dem hinteren Aufhängungsarm (8) zu verbinden,
wobei das stangenseitige Befestigungsteil (36) einen Einstell-/Fixier-Schaltmechanismus (49) umfasst, der in der Lage ist, einen Zustand, in dem ein Einschraubbetrag des inneren Elements (37) in das rohrförmige Teil (43) durch Drehen des inneren Elements (37) relativ zu dem rohrförmigen Teil (43) eingestellt werden kann, und einen Zustand, in dem der Einschraubbetrag des inneren Elements (37) in das rohrförmige Teil (43) durch Fixieren des inneren Elements (37), so dass es nicht relativ zu dem rohrförmigen Teil (43) drehbar ist, fixiert ist, umzuschalten, und
der Einstell-/Fixier-Schaltmechanismus (49) umfasst:
einen Schlitz (50), der in einer Umfangswand des rohrförmigen Teils (43) ausgebildet und so konfiguriert ist, dass ein Durchmesser des rohrförmigen Teils (43) zusammengezogen werden kann, und
einen Befestigungsmechanismus (51), der konfiguriert ist, um den Durchmesser des rohrförmigen Teils (43) durch Festziehen des rohrförmigen Teils (43) in einer Umfangsrichtung zusammenzuziehen.

2. Die Hintere Dämpfungsvorrichtung (21) nach Anspruch 1, wobei die äußere Umfangsseite des inneren Elements (37) mit einem Werkzeugeingriffsteil (40) ausgebildet ist, an dem ein Werkzeug zum Drehen des inneren Elements (37) in Eingriff zu bringen ist.

3. Die hintere Dämpfungsvorrichtung (21) nach Anspruch 1 oder 2, wobei, wenn ein Einschraubbetrag des inneren Elements (37) in das rohrförmige Teil (43) am größten ist, eine Endfläche (43A) des rohrförmigen Teils (43) an einer Seite näher an einer axialen Seite der hinteren Dämpfungsvorrichtung (21) angeordnet ist als eine Endfläche (29A) der Stange (29) an der anderen axialen Endseite der Stange (29).

4. Die hintere Dämpfungsvorrichtung (21) nach einem der Ansprüche 1 bis 3, wobei ein endseitiger Teil des inneren Elements (37) mit einem Vorsprung ausgebildet ist, der in radialer Richtung nach außen vorsteht, und eine der anderen axialen Seite zugewandte Fläche des Vorsprungs einer Endfläche (43A) des rohrförmigen Teils (43) gegenüberliegt.

5. Die hintere Dämpfungsvorrichtung (21) nach einem der Ansprüche 1 bis 4, wobei ein Außendurchmesser des inneren Elements (37) größer ist als ein Außendurchmesser der Stange (29) .

## Revendications

1. Dispositif (21) à coussin arrière à monter entre un corps (2) principal de véhicule et un bras (8) arrière de suspension d'un véhicule (1) de type à califourchon et comprenant un ressort (22) d'absorption de choc et un amortisseur (23) configuré pour atténuer les vibrations du ressort (22),
dans lequel l'amortisseur (23) comprend :
un cylindre (24) ;
un piston (28) prévu dans le cylindre (24) ;
une barre (29) ayant un côté d'extrémité axial relié au piston (28) dans le cylindre (24) et l'autre côté d'extrémité axial s'étendant du cylindre (24) en direction de l'autre côté axial ;
une partie (31) de montage du côté du cylindre prévue à un côté d'extrémité axial du cylindre (24) est prévue pour monter le dispositif (21) à coussin arrière entre le corps (2) principal du véhicule et le bras (8) arrière de suspension ; et
une partie (36) de montage du côté de la barre, prévue à l'autre côté d'extrémité axial de la barre (29), est prévue pour monter le dispositif (21) à coussin arrière entre le corps (2) principal du véhicule et le bras (8) arrière de suspension,
**caractérisé en ce que**
la partie (36) de montage du côté de la barre comprend :
un élément (37) intérieur ayant une forme cylindrique fixé à l'autre côté d'extrémité axial, de la barre (29) co-axialement à la barre (29) et ayant une surface périphérique extérieure, sur laquelle est formée une vis ; et
un élément (42) extérieur monté sur un côté périphérique extérieur de l'élément (37) intérieur, dans lequel l'élément (42) extérieur comprend :
une partie (43) tubulaire ayant une forme tubulaire et ayant une surface périphérique intérieure, sur laquelle une vis à visser avec la vis de l'élément (37) intérieur est formée, de manière à ce que, en réglant la quantité de vissage de l'élément (37) intérieur dans la partie (43) tubulaire, une longueur entière du dispositif (21) à coussin arrière puisse être réglée; et
une partie (44) d'accouplement jointe intégralement à la partie (43) tubulaire de l'élément (42) extérieur pour accoupler l'élément (42) extérieur au corps (2) principal du véhicule ou au bras (8) arrière de suspension;
la partie (36) de montage du côté de la barre comprend un mécanisme (49) de commutation de réglage/fixation apte à commuter entre un état dans lequel une quantité de vissage de l'élément (37) intérieur dans la partie (43) tubulaire peut être réglée en faisant tourner l'élément (37) intérieur par rapport à la partie (43) tubulaire et un état dans lequel la quantité de vissage de l'élément (37) intérieur dans la partie (43) tubulaire est fixée en fixant l'élément (37) intérieur de manière à ce qu'il ne puisse pas tourner par rapport à la partie (43) tubulaire; et
le mécanisme (49) de commutation de réglage/fixation comprend :
une fente (50) formée dans une paroi périphérique de la partie (43) tubulaire et configurée pour permettre de contracter un diamètre de la partie (43) tubulaire; et
un mécanisme (51) de fixation configuré pour contracter le diamètre de la partie (43) tubulaire en serrant la partie (43) tubulaire dans une direction circonférentielle.

2. Dispositif (21) à coussin arrière suivant la revendication 1, dans lequel le côté périphérique extérieur de l'élément (37) intérieur est formé d'une partie (40) d'enclenchement d'un outil, dans laquelle peut être enclenché un outil pour faire tourner l'élément (37) intérieur.

3. Dispositif (21) à coussin arrière suivant la revendication 1 ou 2, dans lequel lorsqu'une quantité de vissage de l'élément (37) intérieur dans la partie (43) tubulaire est la plus grande, une face (43) d'extrémité de la partie (43) tubulaire est placée d'un côté plus près d'un côté axial du dispositif (21) à coussin arrière qu'une face (29A) d'extrémité de la barre (29) de l'autre côté d'extrémité axial de la barre (29).

4. Dispositif (21) à coussin arrière suivant l'une quelconque des revendications 1 à 3, dans lequel une partie du côté d'extrémité de l'élément (37) intérieur est formée d'une saillie faisant saillie vers l'extérieur dans une direction radiale et une surface de la saillie faisant face à l'autre côté axial fait face à une face (43A) d'extrémité de la partie (43) tubulaire.

5. Dispositif (21) à coussin arrière suivant l'une quelconque des revendications 1 à 4, dans lequel un diamètre extérieur de l'élément (37) intérieur est plus grand qu'un diamètre extérieur de la barre (29).
